# NEUE EUROPÄISCHE PATENTSCHRIFT

(11) **EP 1 451 483 B2**
(45) Veröffentlichungstag und Bekanntmachung des Hinweises auf die Entscheidung über den Einspruch: **23.06.2010**
(45) Hinweis auf die Patenterteilung: 24.05.2006
(21) Anmeldenummer: 02795063.3
(22) Anmeldetag: 07.11.2002
(51) Int. Cl.: F16F 15/131

(54) **ZWEIMASSENSCHWUNGRAD**
DUAL MASS FLYWHEEL
VOLANT MOTEUR A DEUX MASSES

(30) Priorität: 23.11.2001 DE 10157397
(43) Veröffentlichungstag der Anmeldung: 01.09.2004
(73) Patentinhaber: Volkswagen Aktiengesellschaft, 38436 Wolfsburg (DE)
(72) Erfinder: SCHMIDT, Andreas, 32602 Vlotho (DE)
(74) Vertreter: Liebl, Thomas
(86) Internationale Anmeldenummer: PCT/EP2002/012413
(87) Internationale Veröffentlichungsnummer: WO 2003/044389

(56) Entgegenhaltungen:
- EP-A2- 0 763 673
- WO-A1-03/040589
- DE-A- 4 339 421
- DE-A- 10 004 125
- DE-A1- 10 034 730
- JP-A- 09 166 180
- US-A- 5 617 940
- US-A- 6 014 912
- US-A1- 2001 025 762

## Beschreibung

Die Erfindung betrifft die Anordnung eines Zweimassenschwungrades.

Ein Zweimassenschwungrad (ZMS) hat im Antriebsstrang eines Kraftfahrzeugs die Aufgabe, Drehschwingungen des Motors abzudämpfen und nicht an das Getriebe weiterzuleiten. Dazu hat das Zweimassenschwungrad eine zentrisch zur Drehachse einer Kurbelwelle der Brennkraftmaschine an dieser befestigbare Primärmasse und eine relativ zur Primärmasse um die Drehachse drehbar gelagerte Sekundärmasse. Primärmasse und Sekundärmasse sind über eine Torsionsdämpfereinrichtung drehelastisch miteinander verbunden. Die Dämpfung wird durch relativ hohe Massenträgheiten der Primär- und Sekundärmassen erreicht. Die Sekundärmasse ist z.B. mittels einer über Steckverzahnungen verbundenen Mitnehmerscheibe mit der Kupplung verbunden.

Dokument US-A- 5 617 940 zeigt als nächstliegen der Stand der Technik in Fig. 11 ein primärseitiges Blechformteil und sekundärseitig ein Blechformteil mit ant kleinerem Durchmesser daran angebundenen Massering.

Die DE 43 39 421 A1 beschreibt ein Zweimassenschwungrad mit einem zentrisch zur Drehachse einer Kurbelwelle der Brennkraftmaschine eines Kraftfahrzeugs befestigbaren primärseitigen ersten Blechformteil, das zu einer Primärmasse beiträgt, einem relativ zum primärseitigen ersten Blechformteil um die Drehachse drehbar gelagerten sekundärseitigen zweiten Blechformteil, das zu einer Sekundärmasse beiträgt, und einer das primärseitige erste Blechformteil und das sekundärseitige zweite Blechformteil drehelastisch miteinander verbindende Torsionsdämpfereinrichtung. Dabei sind Zusatzmassen zur Erhöhung der Primärmasse an speziellen Orten angeordnet.

Aus der DE 100 34 730 A1 ist eine Mehrfach-Kupplungseinrichtung in Kombination mit einer Torsionsschwingungsdämpferanordnung und einer Elektromaschine bekannt, mit der Maßnahmen getroffen werden, um die Momentenübertragungsfähigkeit einer Lamellenkupplungsanordnung mit dem kleineren effektiven Reibradius und dem Momentenübertragungsfähigkeiten der Lamellenkupplungsanordnung mit dem größeren effektiven Reibradius zumindest einander anzunähern in Bezug auf eine die Stärke des Reibeingriffs bestimmende, für beide Kupplungsanordnungen gleiche Referenzeingangsgröße. Hierdurch soll erreicht werden, dass auf der Grundlage der gleichen Eingangsgröße beider Kupplungsanordnungen zumindest annähernd die gleiche Momentenübertragungsfähigkeit aufweisen, also etwa bei dieser gleichen Eingangsgröße das gleiche Drehmoment übertragen können. Gemäß einem zweiten Aspekt ist ein Antriebssystem vorgeschlagen, die eine Mehrfach-Kupplungseinrichtung aufweist, die bezogen auf eine Referenz-Momentenflussrichtung eine gegebenenfalls der Antriebseinheit zugeordnete Eingangsseite und wenigstens zwei einen Getriebe des Antriebsstranges zugeordnete Ausgangsseiten aufweist, und die ansteuerbar ist, ein Drehmoment zwischen der Eingangsseite einerseits und einer ausgewählten Ausgangsseite andererseits übertragen. Dieser Aufbau kann eine Torsionsschwingungsdämpferanordnung umfassen, die bezogen auf Referenz-Momentenflussrichtung eine Primärseite und eine gegen die Wirkung einer Dämpferelementenanordnung um eine der Torsionsschwingungsdämpferanordnung und der Mehrfach-Kupplungseinrichtung gemeinsame Achse bezüglich der Primärseite drehbare Sekundärseite aufweist.

Die nachveröffentlichte EP 1 442 229 A1 zeigt eine Vorrichtung zum Dämpfen und Isolieren von Schwingungen zum Einbauen in einen Antriebsstrang. Der Schwingungsdämpfer weist ein Primärteil und ein Sekundärteil auf, die eine gemeinsame Drehachse aufweisen. Zwischen Primärteil und Sekundärteil sind ein hydraulischer Dämpfer und eine Federeinrichtung geschaltet. Der hydraulische Dämpfer lässt ein begrenztes relatives Verdrehen von Primärteil und Sekundärteil zu. Die Federeinrichtung wirkt einer relativen Verdrehung entgegen. Der Sekundärteil umfasst eine Trägerscheibe zum Tragen des hydraulischen Dämpfers sowie der Federeinrichtung. Es ist eine massebehaftete Isolatorscheibe vorgesehen, die axial neben der Trägerscheibe angeordnet ist. Eine zusätzliche Sekundärmasse ist auf eine Nabe aufgepresst und mit dieser mittels einer Nietverbindung verbunden.

Es besteht ein Interesse nicht nur an einer hohen Primärmasse sondern auch an einer hohen Sekundärmasse. In der Regel ist die Sekundärmasse nicht allein in der eigentlichen Baugruppe Zweimassenschwungrad ausgebildet, sondern es werden auch Bauteile einer benachbarten Baugruppe, die fest mit der Sekundärseite des Zweimassenschwungrads verbunden sind, genutzt, um diese zu erhöhen. Bei einem Handschaltgetriebe zum Beispiel ist die benachbarte Baugruppe eine Trockenkupplung und deren motorseitige Bauteile können die Sekundärmasse erhöhen. Das hat jedoch bei über eine Steckverzahnung mit der Kupplung verbundener Sekundärmasse den Nachteil, daß zwischen der eigentlichen Sekundärseite des Zweimassenschwungrads und einem Außenlamellenträger der Kupplung zwei spielbehaftete Verzahnungen an dem Bauteil Mitnehmerscheibe liegen. Das führt einerseits dazu, daß die Wirksamkeit der Sekundärmasse des Außenlamellenträgers herabgesetzt wird und daß andererseits die Gefahr des Ausschlagens der Verzahnungen an der Mitnehmerscheibe besteht.

Der Erfindung liegt daher die Aufgabe zugrunde, das Zweimassenschwungrad derart anzuordnen auszugestalten und weiterzubilden, daß die oben beschriebenen Nachteile vermieden sind und eine erhöhte Sekundärmasse realisiert.

Diese Aufgabe wird nun durch die Merkmale des Patentanspruches 1 gelöst.

Die Anbindung der zusätzlichen Sekundärmasse in Form eines Masserings mit einem großen Durchmesser über ein Blech - auf einen kleineren Durchmesser geführt - direkt an das sekundärseitigen zweite Blechformteil hat den Vorteil, daß das große Trägheitsmoment vor den Verzahnungen liegt und diese damit entlastet werden. Durch die Anbindung des großen Masseringes mittels eines dünnen Bleches auf einem kleinen Durchmesser kann die Erhöhung der Sekundärmasse auch bei kritischen axialen Bauräumen erfolgen.

In der Zeichnung zeigt:

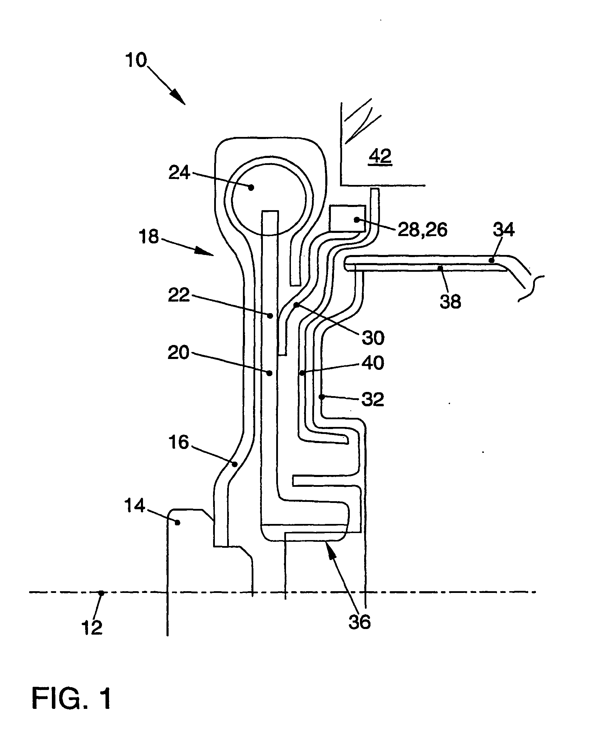

- Fig. 1: schematisch einen teilweisen Axiallängsschnitt durch ein Zweimassenschwungrad 10, das nicht Bestandteil der vorliegenden Erfindung ist.

In Fig. 1 ist ein Axiallängsschnitt durch die obere Hälfte eines Zweimassenschwungrads 10 zentrisch zu einer Drehachse 12 einer angedeuteten Kurbelwelle 14 der Brennkraftmaschine eines Kraftfahrzeugs dargestellt. An der Kurbelwelle 14 ist ein primärseitiges erstes Blechformteil 16 des Zweimassenschwungrads 10 befestigt, das zu einer Primärmasse 18 beiträgt. Ein sekundärseitiges zweites Blechformteil 20 des Zweimassenschwungrads 10 ist relativ zum primärseitigen ersten Blechformteil 16 um die Drehachse 12 drehbar gelagert und trägt zu einer Sekundärmasse 22 bei. Eine Torsionsdämpfereinrichtung 24 verbindet das primärseitige erste Blechformteil 16 und das sekundärseitige zweite Blechformteil 20 drehelastisch miteinander.

Eine zusätzliche Sekundärmasse 26 ist in Form eines Masserings 28 mit einem großen Durchmesser über ein Blech 30 auf einen kleineren Durchmesser geführt direkt an das sekundärseitige zweite Blechformteil 20 angebunden. Das sekundärseitige zweite Blechformteil 20 ist über eine Mitnehmerscheibe 32 mit einem Außenlamellenträger 34 einer Kupplung verbunden. Diese Verbindung weist zwei Verzahnungen 36, 38 auf. Das Blech 30 und die Mitnehmerscheibe 32 erstrecken sich zu verschiedenen Seiten eines Getriebedeckels 40 eines angedeuteten Getriebes 42.

Die Anbindung der zusätzlichen Sekundärmasse 26 in Form eines Masserings 28 mit einem großen Durchmesser über ein Blech 30 auf einen kleineren Durchmesser geführt direkt an das sekundärseitige zweite Blechformteil 20 hat den Vorteil, daß das große Trägheitsmoment vor den Verzahnungen 36, 38 liegt und diese damit entlastet werden. Durch die Anbindung des großen Masseringes 28 mittels eines dünnen Bleches 30 auf einen kleinen Durchmesser kann die Erhöhung der Sekundärmasse auch bei kritischen axialen Bauräumen erfolgen.

Nach einer nicht gezeigten erfindungsgemäßen Ausführungsform sind das Blech 30 und das sekundärseitige Blechformteil 20 einstückig ausgebildet.

Zur Vereinfachung der Darstellung sind die Befestigungsmittel und auch Abdichtungen nicht gezeichnet, da der Fachmann sie an den üblichen Positionen vorsieht.

### BEZUGSZEICHENLISTE

- 10: Zweimassenschwungrad
- 12: Drehachse
- 14: Kurbelwelle
- 16: primärseitiges Blechformteil
- 18: Primärmasse
- 20: sekundärseitiges Blechformteil
- 22: Sekundärmasse
- 24: Torsionsdämpfereinrichtung
- 26: zusätzliche Sekundärmasse
- 28: Massering
- 30: Blech
- 32: Mitnehmerscheibe
- 34: Außenlamellenträger
- 36: Verzahnung
- 38: Verzahnung
- 40: Getriebedeckel
- 42: Getriebes

## Patentansprüche

1. Anordnung eines Zweimassenschwungrades (10), insbesondere für den Antriebsstrang eines Kraftfahrzeuges,
mit einem zentrisch zur Drehachse (12) einer Kurbelwelle (14) der Antriebsmaschine befestigbaren primärseitigen ersten Blechformteil (16), wobei das erste Blechteil (16) zu einer Primärmasse (18) beiträgt,
mit einem relativ zum primärseitigen ersten Blechformteil (16) um die Drehachse drehbar gelagerten sekundärseitigen zweiten Blechformteil (20), wobei das zweite Blechformteil (20) zu einer Sekundärmasse (22) beiträgt,
mit einer das primärseitige erste Blechformteil (16) und das sekundärseitige zweite Blechformteil (20) drehelastisch miteinander verbindenden Torsionsdämpfereinrichtung (24),
mit eine Mitnehmerscheibe (32), die das sekundärseitige zweite Blechformteil (20) mit einem Außenlamellenträger (34) einer Kupplung verbindet, wobei zwischen der Mitnehmerscheibe (32) und dem sekundärseitigen zweiten Blechformteil (20) und/oder zwischen der Mitnehmerscheibe (32) und dem Außenlamellenträger (34) eine Verzahnung (36, 38) vorgesehen ist, und
mit einer zusätzlichen Sekundärmasse (26), die in Form eines Masserings (28) mit einem großen Durchmesser über ein Blech (30) auf einen kleineren Durchmesser geführt direkt an dem sekundärseitigen zweiten Blechformteil (20) angebunden ist, zur, bezogen auf das Trägheitsmoment, Entlastung der wenigstens einen Verzahnung (36; 38), wobei das Blech (30) und das sekundärseitige zweite Blechformteil (20) einstückig ausgebildet sind.

## Claims

1. Arrangement of a two-mass flywheel (10), in particular for the drive train of a motor vehicle,
with a primary-side first sheet-metal moulding (16) fastenable centrically to the axis of rotation (12) of a crankshaft (14) of the engine, the first sheet-metal part (16) contributing to a primary mass (18),
with a secondary-side second sheet-metal moulding (20) mounted rotatably about the axis of rotation in relation to the primary-side first sheet-metal moulding (16), the second sheet-metal moulding (20) contributing to a secondary mass (22),
with a torsion damper device (24) connecting the primary-side first sheet-metal moulding (16) and the secondary-side second sheet-metal moulding (20) to one another in a torsionally elastic manner, with a driving disc (32) which connects the secondary-side second sheet-metal moulding (20) to an outer lamella carrier (34) of a clutch, a toothing (36, 38) being provided between the driving disc (32) and the secondary-side second sheet-metal moulding (20) and/or between the driving disc (32) and the outer lamella carrier (34), and with an additional secondary mass (26) which is tied up directly in the form of a mass ring (28) of large diameter to the secondary-side second sheet-metal moulding (20) to a smaller diameter via a metal sheet (30) for relieving the at least one toothing (36, 38) in terms of the moment of inertia, with the metal sheet (30) and the secondary-side second sheet-metal moulding (20) being produced in one piece.

## Revendications

1. Système de volant d'inertie (10) à deux masselottes, en particulier pour le train d'entraînement d'un véhicule automobile, et qui présente:
du côté primaire, une première pièce (16) en tôle emboutie qui peut être fixée centralement par rapport à l'axe de rotation (12) du vilebrequin (14) du moteur d'entraînement, la première pièce (16) en tôle contribuant à une masse primaire (18),
une deuxième pièce (20) en tôle emboutie montée à rotation autour de l'axe de rotation du côté secondaire par rapport à la première pièce (16) en tôle emboutie du côté primaire, la deuxième pièce (20) en tôle emboutie contribuant à une masse secondaire (22),
un dispositif (24) d'amortissement de la torsion qui relie l'une à l'autre la première pièce (16) en tôle emboutie du côté primaire et la deuxième pièce (20) en tôle emboutie du côté secondaire de manière élastique en rotation,
un disque d'entraînement (32) qui relie la deuxième pièce (20) en tôle emboutie du côté secondaire à un support extérieur (34) à lamelles d'un accouplement, une denture (36, 38) étant prévue entre le disque d'entraînement (32) et la deuxième pièce (20) en tôle emboutie du côté secondaire et/ou entre le disque d'entraînement (32) et le support extérieur (34) à lamelles, et
une masselotte secondaire (26) qui présente la forme d'une masselotte annulaire (28) de grands diamètre qui est reliée directement à la deuxième pièce (20) en tôle emboutie du côté secondaire en étant guidée par une tôle (30) de plus petit diamètre pour délester du moment d'inertie la ou les dentures (36, 38), la tôle (30) et la deuxième pièce (20) en tôle emboutie du côté secondaire étant réalisées en une seule pièce.
